# EUROPEAN PATENT APPLICATION

(11) **EP 4 266 514 A1**
(43) Date of publication of application: **25.10.2023**
(21) Application number: 22854453.2
(22) Date of filing: 09.09.2022
(51) Int. Cl.: H01S 3/07, H01S 3/067

(54) **OPTICAL FIBER AMPLIFIER**

(30) Priority: 02.03.2022 CN 202210198389
(71) Applicant: Wuhan Raycus Fiber Laser Technologies Co., Ltd, East Lake Hi-Tech Development Zone Wuhan, Hubei 430000 (CN)
(72) Inventor: YAN, Penghui, Wuhan, Hubei 430000 (CN); HUANG, Bao, Wuhan, Hubei 430000 (CN); YAN, Dapeng, Wuhan, Hubei 430000 (CN)
(74) Representative: Maiwald GmbH
(86) International application number: PCT/CN2022/118217
(87) International publication number: WO 2023/165109

(57) **Abstract**

The present application discloses an optical fiber amplifier. By adopting two gain optical fibers with different absorption coefficients as an amplification stage of optical fibers, a damage to a device and an impact on system stability caused by ASE generated by optical fibers can be avoided, and at a same time, utilization efficiency to pump light can be improved. On another hand, an original two-stage amplification can be reduced to a single-stage amplification in the present application, which can effectively reduce requirements for timing, take into account improvement of stability and performances of lasers, and reduce production cost of the lasers.

## Description

### TECHNICAL FIELD

The present application relates to the technical field of laser, in particular to an optical fiber amplifier.

### BACKGROUND

Optical fiber lasers have been widely concerned because of their advantages such as good beam quality, high efficiency, good heat dissipation, a compact structure, high reliability, and easy maintenance.

In the prior art, high power lasers are generally amplified by a several stages' mode, which has disadvantages of cumbersome processes, high cost, low utilization efficiency to pumps, and complex requirements for timing. When optical fibers with low absorption coefficients are used in an amplification stage, longer optical fibers are required, which leads to enhancement of nonlinear effects such as a Raman effect and affects stability of the lasers. If optical fibers with high absorption coefficients are used as an amplification to signal light, a strong amplified spontaneous emission (ASE) generates when the signal light is weak, which also affects the stability of the lasers.

### SUMMARY

The present application provides an optical fiber amplifier, which can reduce amplification stages and effectively decrease generation of ASE and suppress nonlinear effects such as a Raman effect.

The present application provides an optical fiber amplifier, optical fiber amplifier includes a seed source, a first gain optical fiber, a second gain optical fiber, and an output device connected in sequence;
the optical fiber amplifier further includes a pump source, the pump source is connected to a pump input end of an optical fiber combiner and configured to provide pump light to the first gain optical fiber and the second gain optical fiber through the optical fiber combiner; and
wherein an absorption coefficient of the first gain optical fiber to the pump light is less than an absorption coefficient of the second gain optical fiber to the pump light.

Optionally, a pumping mode of the pump source is a forward pumping, and the pump source is located between the seed source and the first gain optical fiber.

Optionally, a pumping mode of the pump source is a reverse pumping, and the pump source is located between the output device and the second gain optical fiber.

Optionally, the first gain optical fiber is configured to be used as a pre-amplification to signal light, and the second gain optical fiber is configured to be used as a main amplification to the signal light.

Optionally, the optical fiber amplifier further includes a mode stripper and/or a mode field adapter.

Optionally, an end of the seed source is connected to a signal end of the optical fiber combiner, a common end of the optical fiber combiner is connected to one end of the first gain optical fiber, another end of the first gain optical fiber is connected to one end of the second gain optical fiber, another end of the second gain optical fiber is connected to one end of the mode stripper, and another end of the mode stripper is connected to the output device.

Optionally, an end of the seed source is connected to a signal end of the optical fiber combiner, a common end of the optical fiber combiner is connected to one end of the first gain optical fiber, another end of the first gain optical fiber is connected to one end of the mode field adapter, another end of the mode field adapter is connected to one end of the second gain optical fiber, another end of the second gain optical fiber is connected to one end of the mode stripper, and another end of the mode stripper is connected to the output device.

Optionally, the optical fiber amplifier includes a plurality of pump sources, and the plurality of pump sources are connected to the pump input end of the optical fiber combiner.

Optionally, an end of the seed source is connected to one end of the mode stripper, another end of the mode stripper is connected to one end of the first gain optical fiber, another end of the first gain optical fiber is connected to one end of the second gain optical fiber, another end of the second gain optical fiber is connected to a common end of the optical fiber combiner, and a signal end of the optical fiber combiner is connected to the output device.

Optionally, the absorption coefficient of the first gain optical fiber to the pump light is defined with A1, wherein 0.1 dB/m≤A1<3d B/m, and the absorption coefficient of the second gain optical fiber to the pump light is defined with A2, wherein 3 dB/m≤A2<25 dB/m; a proportion of the pump light absorbed by the first gain optical fiber is defined with B1, wherein 5%B 1<50%, and a proportion of the pump light absorbed by the second gain optical fiber is defined with B2, wherein 50%B2<95%.

Optionally, the first gain optical fiber and the second gain optical fiber are each independently an optical fiber doped with a rare-earth element or a photonic crystal optical fiber, wherein the rare-earth element is selected from at least one of ytterbium, erbium, holmium, thulium, samarium, and bismuth.

Optionally, the pump source is any one of a semiconductor laser, a fiber laser, a solid-state laser, a gas laser, and a Raman laser.

Optionally, a central wavelength of the pump light ranges from 600 nm to 2000 nm.

Optionally, a pumping mode of the pump source is any one of a single-end fiber cell pumping, a single-end cladding pumping, and a double-end cladding pumping.

Optionally, the pump source is any one of a semiconductor laser, a fiber laser, a solid-state laser, a gas laser, and a Raman laser, and a central wavelength of the pump light ranges from 600 nm to 2000 nm.

Optionally, the pump source is any one of a semiconductor laser, a fiber laser, a solid-state laser, a gas laser, and a Raman laser, and a pumping mode of the pump source is any one of a single-end fiber cell pumping, a single-end cladding pumping, and a double-end cladding pumping.

Optionally, the pump source is any one of a semiconductor laser, a fiber laser, a solid-state laser, a gas laser, and a Raman laser; a central wavelength of the pump light ranges from 600 nm to 2000 nm; a pumping mode of the pump source is any one of a single-end fiber cell pumping, a single-end cladding pumping, and a double-end cladding pumping.

Optionally, the optical fiber combiner is any one of (1+1)×1, (2+1)×1, and (6+1)×1.

Optionally, the seed source is one of a semiconductor laser, a fiber laser, a solid-state laser, and a gas laser, and a central wavelength of signal light outputted by the seed source ranges from 600 nm to 2000 nm.

Optionally, the output device is an optical isolator.

Two gain optical fibers with different absorption coefficients are adopted as an amplification stage of optical fibers in the optical fiber amplifier provided by the present application. The first gain optical fiber, that is, an optical fiber with a low absorption coefficient, is used as the pre-amplification to signal light, so as to avoid a damage to a device and an impact on system stability caused by the ASE generated by the optical fiber when power of pump light is greater than power of signal light. The second gain optical fiber, that is, an optical fiber with a high absorption coefficient, is used as the main amplification to signal light, so as to fully absorb remaining pump light, effectively reduce a required length of the optical fiber, suppress nonlinear effects such as a Raman effect, and improve utilization efficiency to the pump light. On another hand, an original two-stage amplification is reduced to a single-stage amplification in the present application, which can effectively reduce requirements for timing, take into account improvement of stability and performances of lasers, and reduce production cost of the lasers. In addition, the optical fiber amplifier provided by the present application is flexible and simple in design, and has a compact structure. An all-fiber design can reduce a volume of the lasers and facilitates industrialization.

### BRIEF DESCRIPTION OF THE DRAWINGS

In order to explain technical solutions in embodiments of the present application more clearly, the following will briefly introduce the drawings needed in the description of the embodiments.
FIG. 1 is a first schematic structural diagram of an optical fiber amplifier provided by an embodiment of the present application;
FIG. 2 is a second schematic structural diagram of the optical fiber amplifier provided by the embodiment of the present application;
FIG. 3 is a third schematic structural diagram of the optical fiber amplifier provided by the embodiment of the present application.

### Reference numerals:

1, seed source; 2, pump source; 3, optical fiber combiner; 4, first gain optical fiber; 5, second gain optical fiber; 6, mode stripper; 7, output device; 8, module field adapter.

### DETAILED DESCRIPTION OF THE EMBODIMENT

Technical solutions in the embodiments of the present application will be described below in combination with drawings in the embodiments of the present application clearly and completely. Obviously, the described embodiments are only part of the embodiments of the present application, not all of them. Based on the embodiments in the present application, all other embodiments obtained by those skilled in the art without creative effort belong to a scope of protection in the present application.

In description of the present application, unless otherwise specified and defined, terms "connected with" and "connected" should be understood in a broad sense, for example, it may be a fixed connection, a detachable connection, or a whole; it may be a mechanical connection, an electrical connection, or mutual communication; it may be a directly connection or an indirectly connection through an intermediate media; and it may be an internal connection of two components or an interaction relationship between two components. For those skilled in the art, meanings of the above terms in the present application can be understood according to situations.

In addition, terms "first" and "second" are only used for description purposes and cannot be understood as indicating or implying relative importance or implicitly indicating a number of indicated technical features. Thus, features defined as "first" and "second" can explicitly or implicitly include one or more of the above-mentioned features. In the description of the present application, "a plurality of" means two or more, unless otherwise specified.

An embodiment of the present application provides an optical fiber amplifier, the optical fiber amplifier is described in detail below. It should be noted that a description order of following embodiments is not used to define a preferred order of the embodiments.

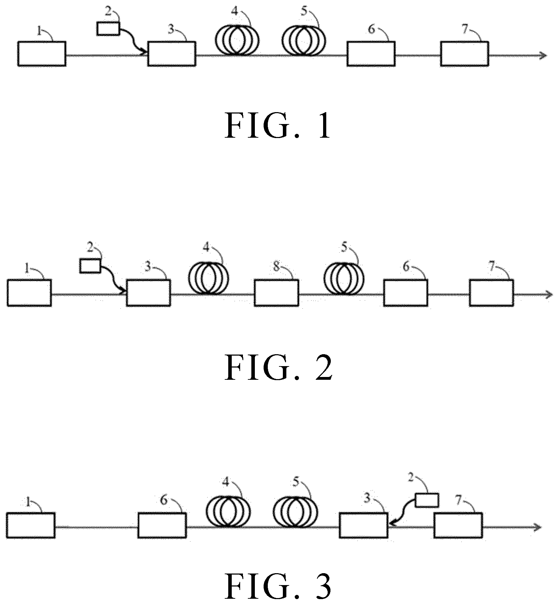

First, please refer to FIG. 1 to FIG. 3. The present application provides an optical fiber amplifier. The optical fiber amplifier includes a seed source 1, a first gain optical fiber 4, a second gain optical fiber 5, and an output device 7 connected in sequence. The optical fiber amplifier also includes a pump source 2. The pump source 2 is connected to a pump input end of an optical fiber combiner 3, and is configured to provide pump light to the first gain optical fiber 4 and the second gain optical fiber 5 through the optical fiber combiner 3. An absorption coefficient of the first gain optical fiber 4 to the pump light is less than an absorption coefficient of the second gain optical fiber 5 to the pump light. In other words, the first gain optical fiber 4 is an optical fiber with a low absorption coefficient, and the second gain optical fiber 5 is an optical fiber with a high absorption coefficient.

It should be noted that a concept of the optical fiber with the low absorption coefficient is relative to a concept of the optical fiber with the high absorption coefficient. In detail, the optical fiber with the high absorption coefficient and the optical fiber with the low absorption coefficient are respectively compared with respect to the absorption coefficient of the first gain optical fiber 4 and the absorption coefficient of the second gain optical fiber 5 in the embodiment of the present application. Those skilled in the art know that absorption coefficients of gain optical fibers are different for different types of pump light, so a comparison of the absorption coefficients is only for a same type of pump light in the embodiment of the present application. In addition, the absorption coefficients are also affected by a radius of the optical fiber and a concentration of a doped rare earth element. Generally, under conditions of a certain radius and a certain wavelength of the pump light, the higher a doping concentration, the higher the absorption coefficient; under conditions of a certain doping concentration and a certain wavelength of the pump light, the greater the radius of the optical fiber, the higher the absorption coefficient.

A pumping mode of the pump source 2 may be a forward pumping or a reverse pumping. When the pumping mode of the pump source is the forward pumping, the pump source 2 may be located between the seed source 1 and the first gain optical fiber 4. Pump light generated by the pump source 2 can be coupled into the first gain optical fiber 4 through the pump input end of the optical fiber combiner 3, and the first gain optical fiber 4 is the optical fiber with the low absorption coefficient. Remaining pump light enters the second gain optical fiber 5 with the high absorption coefficient. Signal light generated by the seed source 1 is coupled into the first gain optical fiber 4 through a signal input end of the optical fiber combiner 3 to be performed a pre-amplification. Subsequently, a main amplification is performed on the signal light through the second gain optical fiber 5, and then the signal light is outputted through the output device 7.

When the pumping mode of the pump source 2 is the reverse pumping, the pump source 2 is located between the output device 7 and the second gain optical fiber 5. The pump light generated by the pump source 2 is coupled into the second gain optical fiber 5 through the pump input end of the optical fiber combiner 3, and the second gain optical fiber 5 is the optical fiber with the high absorption coefficient. Remaining pump light enters the first gain optical fiber 4 with the low absorption coefficient. Signal light generated by the seed source 1 is coupled into the first gain optical fiber 4 to be performed the pre-amplification. Subsequently, the main amplification is performed on the signal light through the second gain optical fiber 5, then the signal light pass through the optical fiber combiner 3, and finally is outputted through the output device 7.

Two gain optical fibers with different absorption coefficients are adopted as an amplification stage of optical fibers in the optical fiber amplifier provided by the embodiment of the present application. The first gain optical fiber 4, that is, the optical fiber with the low absorption coefficient, is used as the pre-amplification to signal light, so as to avoid a damage to a device and an impact on system stability caused by the ASE generated by the optical fiber when power of the pump light is greater than power of the signal light (for example, the power of the pump light is 60 times of the power of the signal light, but not limited to this). The second gain optical fiber 5, that is, the optical fiber with the high absorption coefficient, is used as the main amplification to the signal light, so as to fully absorb remaining pump light, effectively reduce a required length of the optical fiber, suppress nonlinear effects such as a Raman effect, and improve utilization efficiency to the pump light. On another hand, an original two-stage amplification is reduced to a single-stage amplification in the present application, which can effectively reduce requirements for timing, take into account improvement of stability and performances of lasers, and reduce production cost of the lasers. In addition, the optical fiber amplifier provided by the present application is flexible and simple in design, and has a compact structure. An all-fiber design can reduce a volume of the lasers and facilitates industrialization.

In some embodiments, the optical fiber amplifier also includes a mode stripper 6 and/or a mode field adapter 8. That is, the optical fiber amplifier includes the mode stripper 6, the optical fiber amplifier includes the mode field adapter 8, or the optical fiber amplifier includes the mode stripper 6 and the mode field adapter 8. For the embodiment of the present application, the mode stripper 6 may be configured to strip cladding light, and the mode field adapter 8 may be configured to reduce welding loss when diameters of optical fibers are inconsistent.

For example, when the optical fiber amplifier includes the mode stripper 6, please refer to FIG. 1, and FIG. 1 shows a first optical fiber amplifier provided by the embodiment of the present application. An end of the seed source 1 is connected to a signal end of the optical fiber combiner 3. The pump input end of the optical fiber combiner 3 is connected to the pump source 2. A common end of the optical fiber combiner 3 is connected to one end of the first gain optical fiber 4, another end of the first gain optical fiber 4 is connected to one end of the second gain optical fiber 5, another end of the second gain optical fiber 5 is connected to one end of the mode stripper 6, and another end of the mode stripper 6 is connected to the output device 7.

For another example, when the optical fiber amplifier includes the mode stripper 6 and the mode field adapter 8, please refer to FIG. 2, and FIG. 2 shows a second optical fiber amplifier provided by the embodiment of the present application. An end of the seed source 1 is connected to the signal end of the optical fiber combiner 3. The pump input end of the optical fiber combiner 3 is connected to the pump source 2. The common end of the optical fiber combiner 3 is connected to one end of the first gain optical fiber 4, another end of the first gain optical fiber 4 is connected to one end of the mode field adapter 8, another end of the mode field adapter 8 is connected to one end of the second gain optical fiber 5, another end of the second gain optical fiber 5 is connected to one end of the mode stripper 6, and another end of the mode stripper 6 is connected to the output device 7.

For the embodiment of the present application, the pump source 2 is configured to provide pump light to the first gain optical fiber 4 and the second gain optical fiber 5 through the optical fiber combiner 3. A quantity of the pump source 2 may be one or more. When there is a plurality of pump sources 2, the plurality of pump sources 2 may be connected to the pump input end of the optical fiber combiner 3. The pumping mode of the pump source 2 may be the forward pumping or the reverse pumping. When the pumping mode of the pump source 2 is the forward pumping, in some embodiments, as shown in FIG. 1 and FIG. 2, the pump source 2 is located between the seed source 1 and the first gain optical fiber 4. When the pumping mode of the pump source 2 is the reverse pumping, in some embodiments, as shown in FIG. 3, the pump source 2 is located between the output device 7 and the second gain optical fiber 5.

For example, when the pumping mode of the pump source 2 is the reverse pumping, please refer to FIG. 3, and FIG. 3 shows a third optical fiber amplifier provided by the embodiment of the present application. An end of the seed source 1 is connected to one end of the mode stripper 6, another end of the mode stripper 6 is connected to one end of the first gain optical fiber 4, another end of the first gain optical fiber 4 is connected to one end of the second gain optical fiber 5, another end of the second gain optical fiber 5 is connected to the common end of the optical fiber combiner 3, and the signal end of the optical fiber combiner 3 is connected to the output device 7.

In some embodiments, the absorption coefficient of the first gain optical fiber 4 to the pump light is defined with A1, 0.1 dB/m≤A1<3 dB/m. If the absorption coefficient A1 is too low, the signal light generated by the seed source 1 is weak, and if the absorption coefficient A1 is too high, it may lead to a strong ASE. The absorption coefficient of the second gain optical fiber 5 to the pump light is defined with A2, 3 dB/m≤A2<25 dB/m, so as to reduce a total length of the optical fiber and improve a nonlinear threshold on a premise of ensuring a full absorption to the pump light. It can be understood that the absorption coefficient of the first gain optical fiber 4 to the pump light is any value within a range of 0.1 dB/m% A1<3 dB/m, such as 0.1 dB/m, 0.5 dB/m, 1 dB/m, 1.5 dB/m, 2 dB/m, 2.5 dB/m, 2.8 dB/m, etc., or other values not listed within the above-mentioned range. The absorption coefficient of the second gain optical fiber 5 to the pump light is any value within a range of 3 dB/m≤A2<25 dB/m, including 3 dB/m, 5 dB/m, 8 dB/m, 10 dB/m, 13 dB/m, 15 dB/m, 18 dB/m, 20 dB/m, 24 dB/m, etc., or other values not listed within the above-mentioned range.

A proportion of the pump light absorbed by the first gain optical fiber 4 is defined with B1, 5%≤B1<50%. A proportion of the pump light absorbed by the second gain optical fiber 5 is defined with B2, 50%≤B2<95%. If the proportion of the pump light absorbed by the first gain optical fiber 4 is too high, a length of the corresponding first gain optical fiber 4 needs to be increased to reduce the nonlinear threshold. If the proportion of the pump light absorbed by the first gain optical fiber 4 is too low, it may cause the signal light amplified by the first gain optical fiber 4 to be weaker, resulting in a generation of the ASE when passing through the second gain optical fiber 5. It can be understood that the proportion of the pump light absorbed by the first gain optical fiber 4 is any value within a range of 5%≤B1<50%, such as 5%, 10%, 15%, 20%, 25%, 30%, 35%, 40%, 45%, 48%, or other values not listed in the above-mentioned range. The proportion of the pump light absorbed by the second gain optical fiber 5 is any value within a range of 50%≤B2<95%, including 50%, 55%, 60%, 65%, 75%, 80%, 85%, 90%, 94%, etc., or other values not listed in the above-mentioned range.

In some embodiments, the first gain optical fiber 4 and the second gain optical fiber 5 are each independently an optical fiber doped with a rare-earth element or a photonic crystal optical fiber, that is, the first gain optical fiber 4 may be the optical fiber doped with the rare-earth element or the photonic crystal optical fiber, the second gain optical fiber 5 may be the optical fiber doped with the rare-earth element or the photonic crystal optical fiber, and the first gain optical fiber 4 and the second gain optical fiber 5 may be the same or different. The rare earth element is selected from at least one of ytterbium (Yb), erbium (Er), holmium (Ho), thulium (Tm), samarium (Sm), and bismuth (Bi), for example, the rare earth element may be Yb, or may be selected from Yb and Er.

In some embodiments, the pump source 2 is any one of a semiconductor laser, a fiber laser, a solid-state laser, a gas laser, and a Raman laser. In some specific embodiments, a central wavelength of the pump light emitted by the pump source 2 ranges from 600 nm to 2000 nm. It can be understood that the central wavelength of the pump light emitted by the pump source 2 may be any value within a range of 600 nm to 2000 nm, including 600 nm, 800 nm, 1000 nm, 1200 nm, 1500 nm, 1800 nm, 2000 nm, etc., or other values not listed in the range of 600 nm to 2000 nm.

In some embodiments, the pumping mode of the pump source 2 is any one of a single-end fiber cell pumping, a single-end cladding pumping, and a double-end cladding pumping.

In some embodiments, the optical fiber combiner 3 is any one of (1+1)×1, (2+1)×1, and (6+1)×1.

In some embodiments, the seed source 1 is one of a semiconductor laser, a fiber laser, a solid-state laser, and a gas laser. A central wavelength of the signal light outputted by the seed source 1 ranges from 600 nm to 2000 nm. It can be understood that the central wavelength of the signal light outputted by the seed source 1 may be any value within a range of 600 nm to 2000 nm, including 600 nm, 800 nm, 1000 nm, 1200 nm, 1500 nm, 1800 nm, 2000 nm, etc., or other values not listed in the range of 600 nm to 2000 nm.

In some embodiments, the output device 7 may be an optical isolator, specifically, an isolator independent of polarization may be selected.

The present application is described in detail in the following embodiments. Embodiment 1
The embodiment provides the optical fiber amplifier, with a structure as shown in FIG. 1. In the embodiment, the first gain optical fiber 4 and the second gain optical fiber 5 are gain optical fibers doped with a same rare earth element, such as the gain optical fibers doped with Yb.

A semiconductor laser diode with a central wavelength of 915 nm or 976 nm is selected as the pump source 2. A type of (2+1)×1 is selected as the optical fiber combiner 3, such as a type of 10/125 or a type of 20/125. The first gain optical fiber 4 is the optical fiber with the low gain coefficient. A Yb-doped optical fiber with a diameter of a fiber cell of 10 µm, 20 µm, 30 µm, 50 µm, or 100 µm produced by domestic Ruixin Company is selected as the first gain optical fiber 4, and the absorption coefficient of the first gain optical fiber 4 to pump light is 0.5 dB/m@915 nm (that is, at a pump wavelength of 915 nm, pump light with pump power of 0.5 dB can be absorbed by the optical fiber per meter). A Yb-doped optical fiber with a diameter of a fiber cell of 10 µm, 20 µm, 30 µm, 50 µm, or 100 µm produced by domestic Ruixin Company is selected as the second gain optical fiber 5, and the absorption coefficient of the second gain optical fiber 5 to pump light is 10 dB/m@915 nm. The optical isolator is selected as the output device 7, in detail, the isolator independent of polarization is selected.

A specific connection mode of the optical fiber amplifier in the embodiment includes: an end of the seed source 1 is connected to the signal end of the optical fiber combiner 3, the common end of the optical fiber combiner 3 is connected to one end of the first gain optical fiber 4, another end of the first gain optical fiber 4 is connected to one end of the second gain optical fiber 5, another end of the second gain optical fiber 5 is connected to one end of the mode stripper 6, and another end of the mode stripper 6 is connected to the output device 7.

A principle of the optical fiber amplifier in the embodiment includes: the pump light generated by the pump source 2 is first coupled into the first gain optical fiber 4 through the pump input end of the optical fiber combiner 3, and the first gain optical fiber 4 is the optical fiber with the low absorption coefficient. Later, most of the pump light enters the second gain optical fiber 5 with the high absorption coefficient. Signal light with a central wavelength of 1064 nm is generated by the seed source 1, and the signal light is coupled into the first gain optical fiber 4 through the signal input end of the fiber combiner 3 to be performed the pre-amplification. Subsequently, the main amplification is performed on the signal light through the second gain optical fiber 5, then cladding light is stripped through the mode stripper 6, and finally is outputted through the output device 7.

### Embodiment 2

The embodiment provides the optical fiber amplifier with the structure as shown in FIG. 1. The first gain optical fiber 4 and the second gain optical fiber 5 in the embodiment are gain fibers doped with different rare earth elements, for example, the first gain optical fiber 4 is an optical fiber doped with erbium, and the second gain optical fiber 5 is an optical fiber doped with erbium and ytterbium.

A semiconductor laser diode with a central wavelength of 976 nm is selected as the pump source 2. A type of (2+1)×1 is selected as the optical fiber combiner 3, such as a type of 10/125 or a type of 20/125. The first gain optical fiber 4 is the optical fiber with the low gain coefficient. Specifically, an erbium-doped optical fiber with a diameter of a fiber cell of 10 µm, 20 µm, 30 µm, 50 µm, or 100 µm produced by domestic Ruixin Company may be selected as the first gain optical fiber 4, and the absorption coefficient of the first gain optical fiber 4 to pump light may be 2.5 dB/m@976 nm. The second gain optical fiber 5 is the optical fiber with the high gain coefficient. Optical fibers co doped with erbium and ytterbium with a diameter of a fiber cell of 10 µm, 20 µm, 30 µm, 50 µm, or 100 µm produced by the domestic Ruixin Company may be selected as the second gain optical fiber 5, and the absorption coefficient of the second gain optical fiber 5 to pump light may be 15 dB/m@976 nm. The optical isolator is selected as the output device 7, in detail, the optical isolator independent of polarization is selected.

A specific connection mode of the optical fiber amplifier in the embodiment includes: an end of the seed source 1 is connected to the signal end of the optical fiber combiner 3, the common end of the optical fiber combiner 3 is connected to one end of the first gain optical fiber 4, another end of the first gain optical fiber 4 is connected to one end of the mode field adapter 8, another end of the mode field adapter 8 is connected to one end of the second gain optical fiber 5, another end of the second gain optical fiber 5 is connected to one end of the mode stripper 6, and another end of the mode stripper 6 is connected to the output device 7.

A principle of the optical fiber amplifier in the embodiment includes: the pump light generated by the pump source 2 is coupled into the first gain optical fiber 4 through the pump input end of the optical fiber combiner 3. Later, most of the pump light enters the second gain optical fiber 5. Signal light with a central wavelength of 1550 nm is generated by the seed source 1, and the signal light is coupled into the first gain optical fiber 4 through the signal input end of the fiber combiner 3 to be performed the pre-amplification. Subsequently, the main amplification is performed on the signal light through the second gain optical fiber 5, then cladding light is stripped through the mode stripper 6, and finally is outputted through the output device 7.

### Embodiment 3

The embodiment provides the optical fiber amplifier with a structure as shown in FIG. 2. A basic structure and a principle of the optical fiber amplifier in the FIG.3 are similar to the structure and the principle of the optical fiber amplifier shown in FIG. 1, except that the mode field adapter 8 is disposed between the first gain optical fiber 4 and the second gain optical fiber 5.

### Embodiment 4

The embodiment provides the optical fiber amplifier with a structure as shown in FIG. 3. A basic structure in FIG. 3 is similar to the structure in FIG. 1, except that the mode stripper 6 is located between the seed source 1 and the first gain optical fiber 4, and the pump source 2 is located between the second gain optical fiber 5 and the output device 7.

A principle of the optical fiber amplifier in the embodiment includes: the pump light generated by the pump source 2 is coupled into the second gain optical fiber 5 through the pump input end of the optical fiber combiner 3; the second gain optical fiber 5 is the optical fiber with the high absorption coefficient. Remaining pump light enters the first gain optical fiber 4 with the low absorption coefficient. The signal light generated by the seed source 1 is coupled into the first gain optical fiber 4 through the mode stripper to be performed the pre-amplification. Subsequently, the main amplification is performed on the signal light through the second gain optical fiber 5, then the signal light passes through the fiber combiner 3, and finally is outputted through the output device 7.

To sum up, two gain optical fibers with different absorption coefficients are adopted as an amplification stage of optical fibers in the optical fiber amplifier provided by the present application. The first gain optical fiber, that is, the optical fiber with the low absorption coefficient, is used as the pre-amplification to signal light, so as to avoid a damage to a device and an impact on system stability caused by the ASE generated by the optical fiber when power of the pump light is greater than power of the signal light. The second gain optical fiber, that is, the optical fiber with the high absorption coefficient, is used as the main amplification to the signal light, so as to fully absorb remaining pump light, effectively reduce a required length of the optical fiber, suppress nonlinear effects such as a Raman effect, and improve utilization efficiency to the pump light. On another hand, an original two-stage amplification is reduced to a single-stage amplification in the present application, which can effectively reduce requirements for timing, take into account improvement of stability and performances of lasers, and reduce production cost of the lasers. In addition, the optical fiber amplifier provided by the present application is flexible and simple in design, and has a compact structure. An all-fiber design can reduce a volume of the lasers and facilitates industrialization.

The optical fiber amplifier provided by the embodiments of the present application is described in detail above. In this paper, a specific example is used to describe a principle and an implementation mode of the present application. The description of the above embodiments is only used to help understand a method and a core idea of the present application; at the same time, for those skilled in the art, according to an idea of the present application, there will be changes in the specific implementation mode and application scope. In conclusion, contents of this specification should not be interpreted as a restriction on the present application.

## Claims

1. An optical fiber amplifier, comprising a seed source, a first gain optical fiber, a second gain optical fiber, and an output device connected in sequence;
wherein the optical fiber amplifier further comprises a pump source, the pump source is connected to a pump input end of an optical fiber combiner and configured to provide pump light to the first gain optical fiber and the second gain optical fiber through the optical fiber combiner; and
wherein an absorption coefficient of the first gain optical fiber to the pump light is less than an absorption coefficient of the second gain optical fiber to the pump light.

2. The optical fiber amplifier of claim 1, wherein a pumping mode of the pump source is a forward pumping, and the pump source is located between the seed source and the first gain optical fiber.

3. The optical fiber amplifier of claim 1, wherein a pumping mode of the pump source is a reverse pumping, and the pump source is located between the output device and the second gain optical fiber.

4. The optical fiber amplifier of claim 1, wherein the first gain optical fiber is configured to be used as a pre-amplification to signal light, and the second gain optical fiber is configured to be used as a main amplification to the signal light.

5. The optical fiber amplifier of claim 1, wherein the optical fiber amplifier further comprises a mode stripper and/or a mode field adapter.

6. The optical fiber amplifier of claim 5, wherein an end of the seed source is connected to a signal end of the optical fiber combiner, a common end of the optical fiber combiner is connected to one end of the first gain optical fiber, another end of the first gain optical fiber is connected to one end of the second gain optical fiber, another end of the second gain optical fiber is connected to one end of the mode stripper, and another end of the mode stripper is connected to the output device.

7. The optical fiber amplifier of claim 5, wherein an end of the seed source is connected to a signal end of the optical fiber combiner, a common end of the optical fiber combiner is connected to one end of the first gain optical fiber, another end of the first gain optical fiber is connected to one end of the mode field adapter, another end of the mode field adapter is connected to one end of the second gain optical fiber, another end of the second gain optical fiber is connected to one end of the mode stripper, and another end of the mode stripper is connected to the output device.

8. The optical fiber amplifier of claim 1, wherein the optical fiber amplifier comprises a plurality of pump sources, and the plurality of pump sources are connected to the pump input end of the optical fiber combiner.

9. The optical fiber amplifier of claim 5, wherein an end of the seed source is connected to one end of the mode stripper, another end of the mode stripper is connected to one end of the first gain optical fiber, another end of the first gain optical fiber is connected to one end of the second gain optical fiber, another end of the second gain optical fiber is connected to a common end of the optical fiber combiner, and a signal end of the optical fiber combiner is connected to the output device.

10. The optical fiber amplifier of claim 1, wherein the absorption coefficient of the first gain optical fiber to the pump light is defined with A1, wherein 0.1 dB/m≤A1<3d B/m, and the absorption coefficient of the second gain optical fiber to the pump light is defined with A2, wherein 3 dB/m≤A2<25 dB/m; a proportion of the pump light absorbed by the first gain optical fiber is defined with B1, wherein 5%:SB 1 <50%, and a proportion of the pump light absorbed by the second gain optical fiber is defined with B2, wherein 50%≤B2<95%.

11. The optical fiber amplifier of claim 1, wherein the first gain optical fiber and the second gain optical fiber are each independently an optical fiber doped with a rare-earth element or a photonic crystal optical fiber, wherein the rare-earth element is selected from at least one of ytterbium, erbium, holmium, thulium, samarium, and bismuth.

12. The optical fiber amplifier of claim 1, wherein the pump source is any one of a semiconductor laser, a fiber laser, a solid-state laser, a gas laser, and a Raman laser.

13. The optical fiber amplifier of claim 1, wherein a central wavelength of the pump light ranges from 600 nm to 2000 nm.

14. The optical fiber amplifier of claim 1, wherein a pumping mode of the pump source is any one of a single-end fiber cell pumping, a single-end cladding pumping, and a double-end cladding pumping.

15. The optical fiber amplifier of claim 1, wherein the pump source is any one of a semiconductor laser, a fiber laser, a solid-state laser, a gas laser, and a Raman laser, and a central wavelength of the pump light ranges from 600 nm to 2000 nm.

16. The optical fiber amplifier of claim 1, wherein the pump source is any one of a semiconductor laser, a fiber laser, a solid-state laser, a gas laser, and a Raman laser, and a pumping mode of the pump source is any one of a single-end fiber cell pumping, a single-end cladding pumping, and a double-end cladding pumping.

17. The optical fiber amplifier of claim 1, wherein the pump source is any one of a semiconductor laser, a fiber laser, a solid-state laser, a gas laser, and a Raman laser; a central wavelength of the pump light ranges from 600 nm to 2000 nm; a pumping mode of the pump source is any one of a single-end fiber cell pumping, a single-end cladding pumping, and a double-end cladding pumping.

18. The optical fiber amplifier of claim 1, wherein the optical fiber combiner is any one of (1+1)×1, (2+1)×1, and (6+1)×1.

19. The optical fiber amplifier of claim 1, wherein the seed source is one of a semiconductor laser, a fiber laser, a solid-state laser, and a gas laser, and a central wavelength of signal light outputted by the seed source ranges from 600 nm to 2000 nm.

20. The optical fiber amplifier of claim 1, wherein the output device is an optical isolator.
